# EUROPEAN PATENT SPECIFICATION

(11) **EP 3 632 651 B1**
(45) Date of publication and mention of the grant of the patent: **06.10.2021**
(21) Application number: 18210631.0
(22) Date of filing: 06.12.2018
(51) Int. Cl.: B29C 45/78, B29C 45/77, B29C 33/00

(54) **INJECTION MOLDING APPARATUS**
SPRITZGIESSMASCHINE
APPAREIL DE MOULAGE PAR INJECTION

(30) Priority: 01.10.2018 TW 107134646
(43) Date of publication of application: 08.04.2020
(73) Proprietor: Chung Yuan Christian University, Taoyuan City 32023 (TW)
(72) Inventor: CHEN, Shia-Chung, 32023 Taoyuan City (TW); CHANG, Yung-Hsiang, 32023 Taoyuan City (TW); WEI, Tzu-Hsiang, 32023 Taoyuan City (TW); WANG, Guo-Jui, 32023 Taoyuan City (TW)
(74) Representative: Ter Meer Steinmeister & Partner

(56) References cited:
- DE-A1-102009 014 311
- DE-U1- 29 708 297
- US-A1- 2006 073 227
- US-A1- 2008 085 334
- US-A1- 2013 030 723

## Description

### BACKGROUND

### Technical Field

The disclosure relates to a molding apparatus, particularly to an injection molding apparatus.

### Related Art

Injection molding is a process of producing parts made of thermoplastic or thermosetting plastic. A plastic is heated and melted into a flowing state in a barrel of an injection molding machine. Next, under pressurization from a plunger or a screw, the plastic is compressed and moved forward, and is then injected into a closed mold having a lower temperature at a very high speed through a nozzle at a front end of the barrel. After a period of cooling and setting, the mold is opened to obtain an injection molded product.

In the process of injection molding, factors such as injection pressure, mold temperature, pressure holding time, and environmental temperature may affect quality of the injection molded product. In existing injection molding machines, the quality of the injection molded product can be estimated by sensing the pressure of the plastic and sensing the temperature of the mold. A temperature sensor is usually disposed on an inner surface of the mold so as to sense the temperature of the plastic in the mold. However, the temperature sensor disposed on the inner surface of the mold may result in an undesired or uneven shape of the inner surface, thus affecting the quality of the injection molded product.
US 2013/030723 A1 relates to a system for multivariate remote monitoring of polymer processing. The system comprises multivariate sensors, which include a pressure sensor and a temperature sensor, wherein a lens or a window which allows transmission of the IR-radiation is disposed between the temperature sensor and the mold.
US 2006/073227 A1 relates to a molding system for molding micro pattern structure having a micro heating element to enhance transcribability and mechanical and optical properties of products. The micro heating element with a MEMS structure which can control a temperature of the mold insert by heating is formed between the mold insert and a mold.
DE 10 2009 014311 A1 relates to a method for controlling functions of injection molding machines by means of temperature and/or pressure sensors of a melt in at least one hot channel, a nozzle and/or a cavity. The temperature sensor is pressed by means of a spacer sleeve against the base of the blind hole, which has only a small distance (0.2 to 3.0 mm) to the cavity surface.
US 2008/085334 A1 relates to sensors for use in injection molding systems. One or more sensors are inserted in residual holes formed during the manufacturing of a passageway. Since the sensors are disposed within the residual holes, it is possible to avoid having to bore additional apertures in the manifold. The overall strength of the manifold may be increased and the likelihood of damage to the hot runner system due to leakage may be reduced.
DE 297 08 297 U1 relates to a temperature sensor for use in injection molding tools. The temperature sensor is H-shaped in a sectional view. A first recess has been made in one of the end faces, into which a window made of a material that is resistant to high pressure but transparent to infrared rays (e.g. sapphire) is inserted. The disc-shaped window is preferably designed as a lens, whose surface facing the material in the injection mold is flat.

### SUMMARY

The disclosure provides an injection molding apparatus capable of improving quality of an injection molded product.

The object is solved by the features of the independent claims. Preferred embodiments are given in the dependent claims.

The injection molding apparatus of the disclosure includes a mold, an injection device, and at least one temperature sensing device. The mold has a mold cavity and an inner surface, wherein the inner surface faces the mold cavity. The injection device is adapted to inject a material into the mold cavity. The temperature sensing device is disposed at the mold and is adapted to sense a temperature of the material in the mold cavity. The temperature sensing device and the inner surface have a distance therebetween.

In an embodiment of the disclosure, the inner surface is located between the temperature sensing device and the mold cavity.

In an embodiment of the disclosure, the mold includes a first mold and a second mold. The mold cavity is formed between the first mold and the second mold. The temperature sensing device is disposed at the first mold. The inner surface is formed in the first mold.

In an embodiment of the disclosure, the temperature sensing device is an infrared sensing device or an ultrasonic sensing device.

The mold includes a transparent portion. The transparent portion is located at least between the mold cavity and the temperature sensing device.

In an embodiment of the disclosure, a material of the transparent portion includes tempered glass.

The transparent portion is adapted to move relative to other portions of the mold in a translation direction.

In an embodiment of the disclosure, the mold is adapted to be released in a demolding direction, and the translation direction is perpendicular to the demolding direction.

In an embodiment of the disclosure, the injection molding apparatus further includes at least one pressure sensing device. The pressure sensing device is disposed at the mold and is adapted to sense a pressure of the material in the mold cavity.

In an embodiment of the disclosure, number of the at least one pressure sensing device is plural, and number of the at least one temperature sensing device is plural. The pressure sensing devices respectively correspond to a plurality of positions in the mold to respectively sense the pressure of the material corresponding to the positions in the mold. The temperature sensing devices respectively correspond to the positions in the mold to respectively sense the temperature of the material corresponding to the positions in the mold.

Based on the above, in the injection molding apparatus of the disclosure, the temperature sensing device is embedded in the mold and is spaced apart from the inner surface of the mold by a distance. Thus, disposition of the temperature sensing device will not render the inner surface of the mold into an undesired or uneven shape, and the quality of the injection molded product can thus be improved.

To make the above features and advantages of the disclosure more comprehensible, examples accompanied with drawings are described in detail as follows.

### BRIEF DESCRIPTION OF THE DRAWINGS

FIG. 1 is a schematic view of an injection molding apparatus according to an embodiment of the disclosure.
FIG. 2 is a block view of some components of the injection molding apparatus of FIG. 1.
FIG. 3 is a schematic view of an injection molding apparatus according to another embodiment of the disclosure.
FIG. 4 is a schematic view of an injection molding apparatus according to another embodiment of the disclosure.
FIG. 5 is a schematic view of an injection molding apparatus according to another embodiment of the disclosure.

### DESCRIPTION OF THE EMBODIMENTS

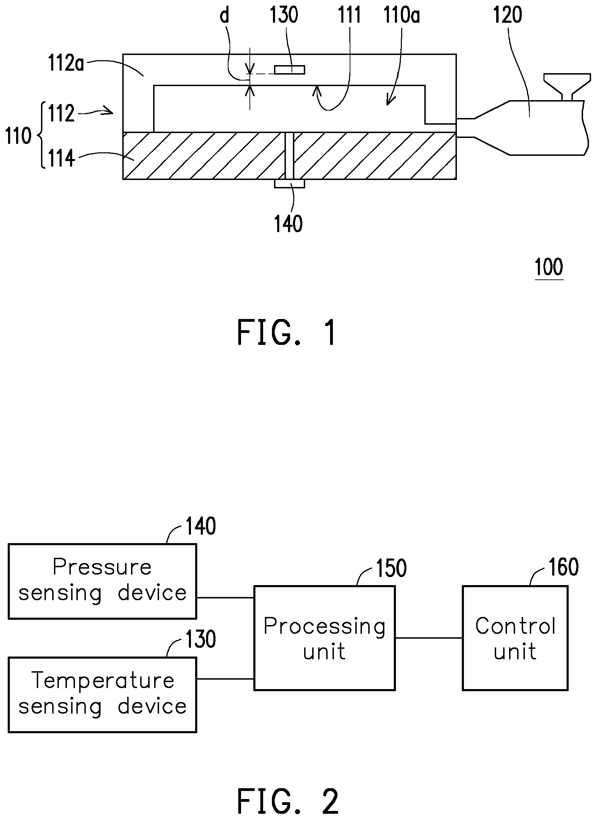

FIG. 1 is a schematic view of an injection molding apparatus according to an embodiment of the disclosure. Referring to FIG. 1, an injection molding apparatus 100 of the present embodiment includes a mold 110, an injection device 120, and at least one temperature sensing device 130. The mold 110 has a mold cavity 110a and an inner surface 111, the inner surface 111 facing the mold cavity 110a. The injection device 120 is adapted to inject a material (such as a plastic) into the mold cavity 110a. The temperature sensing device 130 is disposed at the mold 110 and is adapted to sense a temperature of the material in the mold cavity 110a.

As shown in FIG. 1, the temperature sensing device 130 is embedded in the mold 110 and is spaced apart from the inner surface 111 of the mold 110 by a distance (d). Thus, disposition of the temperature sensing device 130 will not render the inner surface 111 of the mold 110 into an undesired or uneven shape, and quality of an injection molded product can thus be improved.

In detail, the mold 110 of the present embodiment includes a first mold 112 and a second mold 114. The mold cavity 110a is formed between the first mold 112 and the second mold 114. The temperature sensing device 130 is disposed at the first mold 112. The inner surface 111 is formed in the first mold 112, such that the inner surface 111 is located between the temperature sensing device 130 and the mold cavity 110a.

In the present embodiment, the temperature sensing device 130 is, for example, an infrared sensing device (e.g., a photoresistor). Correspondingly, the mold 110 includes a transparent portion 112a. The transparent portion 112a is located at least between the mold cavity 110a and the temperature sensing device 130 (it is illustrated that the transparent portion 112a is whole of the first mold 112), such that the infrared sensing device can sense the temperature of the material in the mold cavity 110a via the transparent portion 112a. A material of the transparent portion 112a may be quartz tempered glass or other suitable transparent material, which is not limited in the disclosure.

The transparent portion of the present embodiment is adapted to move relative to other portions of the mold 110 in a translation direction (D1). Further, the mold 110 is adapted to be released in a demolding direction (D2). The translation direction (D1) is perpendicular to the demolding direction (D2).

FIG. 2 is a block view of some components of the injection molding apparatus of FIG. 1. Referring to FIG. 1 and FIG. 2, the injection molding apparatus 100 of the present embodiment further includes at least one pressure sensing device 140 and a processing unit 150. The pressure sensing device 140 is disposed at the second mold 114 of the mold 110 and is adapted to sense a pressure of the material in the mold cavity 110a. The processing unit 150 is, for example, a computer or other suitable devices with a computing function. The processing unit 150 is coupled to the pressure sensing device 140 and the temperature sensing device 130, and is adapted to calculate an actual specific volume of the material in the mold 110 according to the pressure of the material in the mold 110 sensed by the pressure sensing device 140 and the temperature of the material in the mold 110 sensed by the temperature sensing device 130. In the present embodiment, a pressure value sensed by the pressure sensing device 140 and a temperature value sensed by the temperature sensing device 130 can be stored in a data acquisition card (DAQ card) and then transmitted to the processing unit 150.

Further, the injection molding apparatus 100 of the present embodiment further includes a control unit 160. The control unit 160 is, for example, a computer or other suitable devices with a control function. The control unit 160 is coupled to the processing unit 150 and is adapted to adjust an injection molding parameter of the injection molding apparatus 100 according to actual temperature and pressure of the material in the mold 110 calculated by the processing unit 150. The injection molding parameter may include an injection pressure of the injection device 120, a temperature of the mold 110, and a pressure holding time performed by the injection device 120. The term "pressure holding" mentioned herein means that, the injection device 120, after injecting the material into the mold 110, continues to apply an appropriate injection pressure to provide an appropriate amount of the material into the mold 110 until the material in the mold 110 solidifies, thus avoiding a situation in which size of the injection molded product is not as expected due to shrinkage of the material in the mold 110 during solidification.

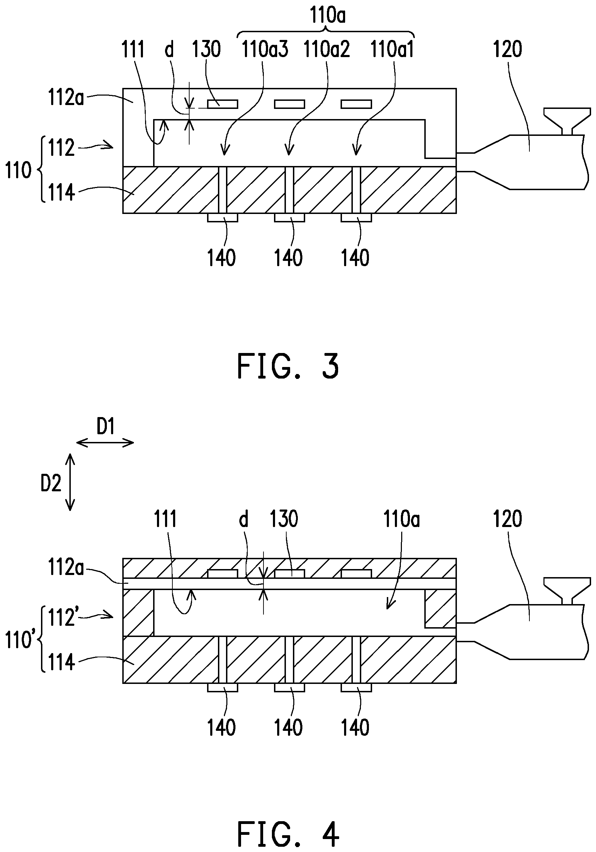

FIG. 3 is a schematic view of an injection molding apparatus according to another embodiment of the disclosure. The embodiment shown in FIG. 3 differs from the embodiment shown in FIG. 1 in that number of the temperature sensing device 130 is plural (illustrated as three), and number of the pressure sensing device 140 is plural (illustrated as three). These pressure sensing devices 140 respectively correspond to positions 110a1, 110a2 and 110a3 in the mold 110, so as to sense the pressures of the material in the mold 110 corresponding to the positions 110a1, 110a2 and 110a3. Similarly, these temperature sensing devices 130 respectively correspond to the positions 110a1, 110a2 and 110a3 in the mold 110, so as to sense the temperatures of the material in the mold 110 corresponding to the positions 110a1, 110a2 and 110a3. By disposing the temperature sensing devices 130 and the pressure sensing devices 140, the injection molding parameter can be more comprehensively adjusted.

Specifically, the injection molding parameter can be adjusted to an expected value according to the temperature and pressure of the material in the position 110a3, and whether or not the material has solidified is determined accordingly. After the material in the position 110a3 has solidified, the injection molding parameter is adjusted to the expected value according to the temperature and pressure of the material in the position 110a2, and whether or not the material has solidified is determined accordingly. After the material in the position 110a2 has solidified, the injection molding parameter is adjusted to the expected value according to the temperature and pressure of the material in the position 110a1, and whether or not the material has solidified is determined accordingly. With respect to the material in different positions in the mold 110, the injection molding parameter is sequentially adjusted in stages as described above. This ensures that the injection molded product is consistent in temperature and pressure in these positions, so as to further enhance the quality thereof.

FIG. 4 is a schematic partial view of an injection molding apparatus according to another embodiment of the disclosure. The embodiment shown in FIG. 4 differs from the embodiment shown in FIG. 3 in that, in a first mold 112' of a mold 110', the transparent portion 112a is only located between the mold cavity 110a and the temperature sensing device 130, and other portions of the first mold 112' are opaque. Under this design, the transparent portion 112a of the first mold 112' may be configured to be not completely fixed to the other portions of the first mold 112', but movable relative to other portions of the mold 110' in the translation direction (D1), wherein the translation direction (D1) is perpendicular to the demolding direction (D2) of the mold 110'. Accordingly, during demolding, by moving the transparent portion 112a in the translation direction (D1), difficult demolding caused by interference between a product and the mold 110' in the demolding direction (D2) can be solved.

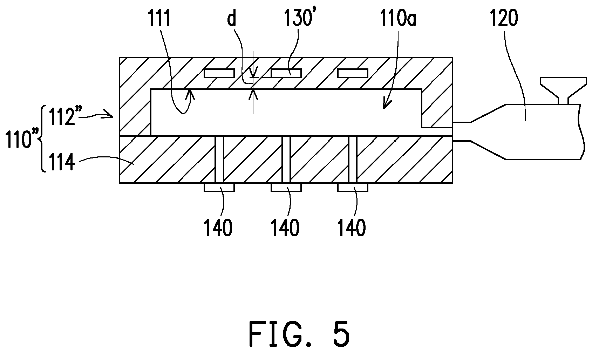

FIG. 5 is a schematic view of an injection molding apparatus according to another embodiment of the disclosure. The embodiment shown in FIG. 5 differs from the embodiment shown in FIG. 3 in that, a temperature sensing device 130' is, for example, an ultrasonic sensing device that performs sensing without via a transparent medium. Correspondingly, a first mold 112" of a mold 110" does not designed with a transparent portion, and the temperature sensing device 130' can perform ultrasonic temperature sensing on the material in the mold cavity 110a via a nontransparent medium between the temperature sensing device 130' and the inner surface 111 of the first mold 112".

In summary, in the injection molding apparatus of the disclosure, the temperature sensing device is embedded in the mold and is spaced from the inner surface of the mold by a distance. Thus, disposition of the temperature sensing device will not render the inner surface of the mold into an undesired or uneven shape, and the quality of the injection molded product can thus be improved.

## Claims

1. An injection molding apparatus (100), **characterized by** comprising:
a mold (110, 110', 110") having a mold cavity (110a) and an inner surface (111), wherein the inner surface (111) faces the mold cavity (110a);
an injection device (120) adapted to inject a material into the mold cavity (110a); and
at least one temperature sensing device (130, 130') disposed at the mold (110, 110', 110") and adapted to sense a temperature of the material in the mold cavity (110a), wherein the temperature sensing device (130, 130') and the inner surface (111) have a distance (d) therebetween
wherein the mold (110, 110', 110") comprises a transparent portion (112a), and the transparent portion (112a) is located at least between the mold cavity (110a) and the temperature sensing device (130, 130'),
**characterized in that** the transparent portion (112a) is adapted to move relative to other portions of the mold (110, 110', 110") in a translation direction (D1).

2. The injection molding apparatus (100) according to claim 1, **characterized in that** the inner surface (111) is located between the temperature sensing device (130, 130') and the mold cavity (110a).

3. The injection molding apparatus (100) according to claim 1, **characterized in that** the mold (110, 110', 110") comprises a first mold (112, 112', 112") and a second mold (114), the mold cavity (110a) is formed between the first mold (112, 112', 112") and the second mold (114), the temperature sensing device (130, 130') is disposed at the first mold (112, 112', 112"), and the inner surface (111) is formed in the first mold (112, 112', 112").

4. The injection molding apparatus (100) according to claim 1, **characterized in that** the temperature sensing device (130, 130') is an infrared sensing device or an ultrasonic sensing device.

5. The injection molding apparatus (100) according to claim 1, **characterized in that** a material of the transparent portion (112a) comprises tempered glass.

6. The injection molding apparatus (100) according to claim 1, **characterized in that** the mold (110, 110', 110") is adapted to be released in a demolding direction (D2), and the translation direction (D1) is perpendicular to the demolding direction (D2).

7. The injection molding apparatus (100) according to claim 1, further **characterized by** comprising at least one pressure sensing device (140), wherein the pressure sensing device (140) is disposed at the mold (110, 110', 110") and is adapted to sense a pressure of the material in the mold cavity (110a).

8. The injection molding apparatus (100) according to claim 7, **characterized in that** number of the at least one pressure sensing device (140) is plural, number of the at least one temperature sensing device (130, 130') is plural, the pressure sensing devices (140) respectively correspond to a plurality of positions (110a1, 110a2, 110a3) in the mold (110, 110', 110") to respectively sense the pressure of the material corresponding to the positions (110a1, 110a2, 110a3) in the mold (110, 110', 110"), and the temperature sensing devices (130, 130') respectively correspond to the positions (110a1, 110a2, 110a3) in the mold (110, 110', 110") to respectively sense the temperature of the material corresponding to the positions in the mold (110, 110', 110")

## Patentansprüche

1. Spritzgießvorrichtung (100), **dadurch gekennzeichnet, dass** sie Folgendes umfasst:
eine Form (110, 110', 110") mit einem Formhohlraum (110a) und einer Innenfläche (111), wobei die Innenfläche (111) dem Formhohlraum (110a) zugewandt ist;
eine Einspritzeinrichtung (120), die ausgelegt ist, ein Material in den Formhohlraum (110a) einzuspritzen; und
mindestens eine Temperaturerfassungseinrichtung (130, 130'), die an der Form (110, 110', 110") angeordnet und ausgelegt ist, eine Temperatur des Materials im Formhohlraum (110a) zu erfassen, wobei zwischen der Temperaturerfassungseinrichtung (130, 130') und der Innenfläche (111) ein Abstand (d) vorhanden ist,
wobei die Form (110, 110', 110") einen durchsichtigen Abschnitt (112a) umfasst und der durchsichtige Abschnitt (112a) zumindest zwischen dem Formhohlraum (110a) und der Temperaturerfassungseinrichtung (130, 130') angeordnet ist,
**dadurch gekennzeichnet, dass** der durchsichtige Abschnitt (112a) ausgelegt ist, sich relativ zu anderen Abschnitten der Form (110, 110', 110") in einer Translationsrichtung (D1) zu bewegen.

2. Spritzgießvorrichtung (100) nach Anspruch 1, **dadurch gekennzeichnet, dass** die Innenfläche (111) zwischen der Temperaturerfassungsvorrichtung (130, 130') und dem Formhohlraum (110a) angeordnet ist.

3. Spritzgießvorrichtung (100) nach Anspruch 1, **dadurch gekennzeichnet, dass** die Form (110, 110', 110") eine erste Form (112, 112', 112") und eine zweite Form (114) umfasst, der Formhohlraum (110a) zwischen der ersten Form (112, 112', 112") und der zweiten Form (114) gebildet ist, die Temperaturerfassungseinrichtung (130, 130') an der ersten Form (112, 112', 112") angeordnet ist und die Innenfläche (111) in der ersten Form (112, 112', 112") gebildet ist.

4. Spritzgießvorrichtung (100) nach Anspruch 1, **dadurch gekennzeichnet, dass** die Temperaturerfassungseinrichtung (130, 130') eine Infraroterfassungseinrichtung oder eine Ultraschallerfassungseinrichtung ist.

5. Spritzgießvorrichtung (100) nach Anspruch 1, **dadurch gekennzeichnet, dass** ein Material des durchsichtigen Abschnitts (112a) gehärtetes Glas umfasst.

6. Spritzgießvorrichtung (100) nach Anspruch 1, **dadurch gekennzeichnet, dass** die Form (110, 110', 110") ausgelegt ist, in einer Entformungsrichtung (D2) freigegeben zu werden und die Translationsrichtung (D1) zur Entformungsrichtung (D2) senkrecht ist.

7. Spritzgießvorrichtung (100) nach Anspruch 1, ferner **dadurch gekennzeichnet, dass** sie mindestens eine Druckerfassungseinrichtung (140) umfasst, wobei die Druckerfassungseinrichtung (140) an der Form (110, 110', 110") angeordnet und ausgelegt ist, einen Druck des Materials im Formhohlraum (110a) zu erfassen.

8. Spritzgießvorrichtung (100) nach Anspruch 7, **dadurch gekennzeichnet, dass** die Anzahl der mindestens einen Druckerfassungseinrichtung (140) eine Mehrzahl ist, die Anzahl der mindestens einen Temperaturerfassungseinrichtung (130, 130') eine Mehrzahl ist, die Druckerfassungseinrichtungen (140) jeweils mehreren Positionen (110a1, 110a2, 110a3) in der Form (110, 110', 110") entsprechen, um jeweils den Druck des Materials zu erfassen, der den Positionen (110a1, 110a2, 110a3) in der Form (110, 110', 110") entspricht, und die Temperaturerfassungseinrichtungen (130, 130') jeweils den Positionen (110a1, 110a2, 110a3) in der Form (110, 110', 110") entsprechen, um jeweils die Temperatur des Materials zu erfassen, die den Positionen in der Form (110, 110', 110") entspricht.

## Revendications

1. Appareil de moulage par injection (100), **caractérisé en ce qu'**il comporte :
un moule (110, 110', 110") ayant une cavité de moule (110a) et une surface intérieure (111), dans lequel la surface intérieure (111) est dirigée vers la cavité de moule (110a) ;
un dispositif d'injection (120) adapté pour injecter une matière dans la cavité de moule (110a) ; et
au moins un dispositif de détection de température (130, 130') disposé sur le moule (110, 110', 110") et adapté pour détecter une température de la matière dans la cavité de moule (110a), dans lequel le dispositif de détection de température (130, 130') et la surface intérieure (111) ont une distance (d) entre eux
dans lequel le moule (110, 110', 110") comporte une partie transparente (112a), et la partie transparente (112a) est située au moins entre la cavité de moule (110a) et le dispositif de détection de température (130, 130'),
**caractérisé en ce que** la partie transparente (112a) est adaptée pour se déplacer par rapport à d'autre parties du moule (110, 110', 110") dans une direction de translation (D1).

2. Appareil de moulage par injection (100) selon la revendication 1, **caractérisé en ce que** la surface intérieure (111) est située entre le dispositif de détection de température (130, 130') et la cavité de moule (110a).

3. Appareil de moulage par injection (100) selon la revendication 1, **caractérisé en ce que** le moule (110, 110', 110") comporte un premier moule (112, 112', 112") et un second moule (114), la cavité de moule (110a) est formée entre le premier moule (112, 112', 112") et le second moule (114), le dispositif de détection de température (130, 130') est disposé sur le premier moule (112, 112', 112"), et la surface intérieure (111) est formée dans le premier moule (112, 112', 112").

4. Appareil de moulage par injection (100) selon la revendication 1, **caractérisé en ce que** le dispositif de détection de température (130, 130') est un dispositif de détection par infrarouge ou un dispositif de détection à ultrasons.

5. Appareil de moulage par injection (100) selon la revendication 1, **caractérisé en ce qu'**une matière de la partie transparente (112a) comporte du verre trempé.

6. Appareil de moulage par injection (100) selon la revendication 1, **caractérisé en ce que** le moule (110, 110', 110") est adapté pour être libéré dans une direction de démoulage (D2), et la direction de translation (D1) est perpendiculaire à la direction de démoulage (D2).

7. Appareil de moulage par injection (100) selon la revendication 1, **caractérisé en outre en ce qu'**il comporte au moins un dispositif de détection de pression (140), dans lequel le dispositif de détection de pression (140) est disposé sur le moule (110, 110', 110") et est adapté pour détecter une pression de la matière dans la cavité de moule (110a).

8. Appareil de moulage par injection (100) selon la revendication 7, **caractérisé en ce que** le au moins un dispositif de détection de pression (140) est en nombre pluriel, le au moins un dispositif de détection de température (130, 130') est en nombre pluriel, les dispositifs de détection de pression (140) correspondent respectivement à une pluralité de positions (110a1, 110a2, 110a3) dans le moule (110, 110', 110") pour détecter respectivement la pression de la matière correspondant aux positions (110a1, 110a2, 110a3) dans le moule (110, 110', 110"), et les dispositifs de détection de température (130, 130') correspondent respectivement aux positions (110a1, 110a2, 110a3) dans le moule (110, 110', 110") pour détecter respectivement la température de la matière correspondant aux positions dans le moule (110, 110', 110").
